(19) Europäisches Patentamt / European Patent Office / Office européen des brevets

(11) **EP 2 039 173 B1**

(12) **EUROPÄISCHE PATENTSCHRIFT**

(45) Veröffentlichungstag und Bekanntmachung des Hinweises auf die Patenterteilung:
**11.04.2012 Patentblatt 2012/15**

(21) Anmeldenummer: **07725600.6**

(22) Anmeldetag: **26.05.2007**

(51) Int Cl.:
***H04N 13/04*** *(2006.01)*

(86) Internationale Anmeldenummer:
**PCT/EP2007/004704**

(87) Internationale Veröffentlichungsnummer:
**WO 2008/003373 (10.01.2008 Gazette 2008/02)**

(54) **VERFAHREN ZUR AUTOSTEROSKOPISCHEN DARSTELLUNG VON BILDINFORMATIONEN MIT EINER ANPASSUNG AN ÄNDERUNGEN DER KOPFPOSITION DES BETRACHTERS**

METHOD FOR THE AUTOSTEREOSCOPIC PRESENTATION OF IMAGE INFORMATION WITH ADAPTATION TO SUIT CHANGES IN THE HEAD POSITION OF THE OBSERVER

PROCEDE DE REPRESENTATION AUTOSTEREOSCOPIQUE D'INFORMATIONS D'IMAGE AVEC UNE ADAPTATION AUX CHANGEMENTS DE POSITION DE LA TETE DE L'OBSERVATEUR

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **06.07.2006 DE 102006031799**

(43) Veröffentlichungstag der Anmeldung:
**25.03.2009 Patentblatt 2009/13**

(73) Patentinhaber: **Fraunhofer-Gesellschaft zur Förderung der angewandten Forschung e.V.**
**80686 München (DE)**

(72) Erfinder:
• **PASTOOR, Siegmund**
**10823 Berlin (DE)**
• **PRZEWOZNY, David**
**12489 Berlin (DE)**
• **BARRE DE LA, René**
**09648 Mittweida (DE)**

(74) Vertreter: **Goeden, Christian et al**
**Andrae Flach Haug**
**Patentanwälte**
**Balanstrasse 55**
**81541 München (DE)**

(56) Entgegenhaltungen:
**EP-A2- 0 833 182     WO-A-01/18589**
**WO-A-98/27451     WO-A-99/05559**

EP 2 039 173 B1

**Beschreibung**

Die Erfindung bezieht sich auf ein Verfahren zur autostereoskopischen Darstellung von Bildinformationen auf einem Matrixbildschirm mit einem parallel zu diesem angeordneten Barrierenraster mit Barrierenelementen und diesen zugeordneten, in Bildzeilen jeweils als Subpixelgruppen zusammengefassten, in ihrer Intensität veränderbaren n Subpixeln einschließlich einer Subpixelreserve, auf denen ein gerasterter Subpixelauszug aus einer rechten und einer linken Stereobildansicht angezeigt wird, die über das Barrierenraster in richtiger Zuordnung dem rechten und dem linken Auge eines Betrachters zugeführt werden, wobei die Bildinformation zumindest bei detektierten horizontalen Paralleländerungen der Kopfposition des Betrachters zum Matrixbildschirm gegenüber einer bildschirmmittigen Ausgangsposition durch eine proportionale Verschiebung von Intensitätsschwerpunkten und durch Neuzuordnung von Bildinformation zu den, dem jeweils anderen Auge sichtbar werdenden Subpixel horizontal in den Bildzeilen des Matrixbildschirms nachgeführt wird.

Bei den autostereoskopischen Darstellungsverfahren, die beispielsweise für die Informations- und Kommunikationstechnik, die Medizintechnik und die Computer- und Videotechnik sowohl im öffentlichen und als auch im privaten Bereich vielfältig einsetzbar sind, wird der gesamte Aufwand der augenrichtigen Stereoseparation im Verfahren und im umsetzenden System selbst geleistet; zusätzliche nutzergebundene Hardware, beispielsweise Brillen, werden nicht benötigt, wodurch sich der Nutzerkomfort wesentlich erhöht. Das Prinzip der autostereoskopischen Darstellungsverfahren beruht auf einer Rasterung verschiedener Bildansichten auf einem Bildschirm und einer optischen Trennung dieser gerasterten Ansichten in Richtung auf die Augen eines Betrachters, sodass von jedem Auge immer nur Anteile einer einzigen Bildansicht in einem optischem Zusammenhang erfasst und gemeinsam zu einer perspektivischen Ansicht zusammengefügt werden. Das Trennraster weist dazu viele benachbart angeordnete Trennelemente, beispielsweise Trennstreifen, Schlitze, Zylinderlinsen oder Prismen, auf. Je nach Anzahl der dargestellten diskreten Bildansichten kann eine Stereoansicht mit einer Einzelperspektive (zwei diskrete Bildansichten, die üblicherweise im Augenabstand aufgenommen werden) oder eine Parallaxansicht mit mehreren Einzelperspektiven (drei und mehr diskrete benachbarte Bildansichten) erzeugt werden. Bei handelsüblichen Flachbildschirmen (LCDs, Plasma-Display, OLEDs, etc.) besteht jedes Pixel aus drei Subpixel der Farben Rot, Grün und Blau, die in ihrem Intensitätswert zur Darstellung des jeweiligen Bildpunktes entsprechend angesteuert werden.

**Stand der Technik**

Zur Vermeidung von Abtasteffekten und zur Erzielung einer annähernd symmetrischen Auflösung in horizontaler und vertikaler Bildschirmrichtung kann das optische Trennraster bei Matrixbildschirmen unter einem Winkel zum Pixelraster gedreht angebracht werden ("Slanted-Raster-Methode", vergleiche beispielsweise **WO 99105559 A1**). Ein grundsätzlicher Nachteil dieses Ansatzes ist jedoch neben der stark reduzierten Einzelbildauflösung die Tatsache, dass die Einzelperspektiven nicht perfekt getrennt werden können. Dieses Übersprechen der benachbarten Stereokanäle beeinträchtigt den räumlichen Eindruck und mindert die Bildqualität durch beispielsweise Unschärfen, Mehrfachkonturen, Kontrastminderung und Farbfehler.

In der **DE 10 2004 059 729** wird deshalb ein Verfahren zur Erzeugung von gerasterten Subpixelauszügen bei Verwendung eines schrägen Barriereasters mithilfe von verschiedenen Multiplexschemata vorgeschlagen, bei dem Subpixelreserven pro Bildansicht vorgesehen sind. Dabei werden die Subpixel unter Beibehaltung ihrer in der ungerasterten Bildansicht zugeordneten Position eingerastert. Dadurch können der Rechenaufwand und die Rechenzeit für jeden Subpixelauszug erheblich reduziert werden. Weiterhin befindet sich jedes Subpixel an seinem inhaltlich richtigen Ort aus der Einzelansicht, sodass auch bei der für die Autostereoskopie erforderlichen Rasterung eine originalgetreue Bildwiedergabe gewährleistet werden kann. Jedes gewählte Multiplexschema besteht aus der fortschreitend bildzeilenweisen Anordnung von zwei (oder drei) benachbarten Subpixel aus der rechten Bildansicht direkt und lückenlos neben zwei (oder drei) benachbarten Subpixel aus der linken Bildansicht. Zwischen den einzelnen Bildzeilen wird jeweils ein Versatz von einem Subpixel eingehalten, sodass sich eine Subpixelüberdeckung für das gleiche Auge zwischen benachbarten Bildzeilen von einem (oder zwei) Subpixel ergibt und Übersprechen zwischen den beiden Bildansichten verringert wird.

Um eine größtmögliche Bildqualität mit einer hohen Bildauflösung für einen einzelnen Betrachter zu erzielen, wurden zweikanalige (Rasterung einer linken und einer rechten Bildansicht) autostereoskopische Verfahren beschrieben, die mit mechanischen und/oder elektronischen Mitteln die Betrachtungszonen auf dem Bildschirm an die momentane Position der Augen des Betrachters anpassen ("Trackingverfahren", vergleiche beispielsweise EP 0 354 851 A2). Die Augen- bzw. Pupillenposition oder ein anderes Kopf- oder Augendetail kann mit bekannten videotechnischen Verfahren berührungs- und nahezu verzögerungsfrei gemessen werden. Bei diesen bekannten zweikanaligen Verfahren ist das vorgesetzte Trennraster orthogonal zum Pixelraster angeordnet, sodass die Auflösung in der einen (beispielsweise horizontalen) Richtung auf die Hälfte vermindert wird, während sie in der anderen (entsprechend vertikalen) Richtung unverändert bleibt. Um die Anforderungen an die Genauigkeit und Reaktionszeit des Trackingverfahrens für die Augenposition zu reduzieren, wurde vorgeschlagen, zusätzliche Bildpunktreserven in den linken und rechten Bildspalten des jeweils gerasterten Stereopaares einzuführen (vergleiche beispielsweise DE 197 36 035 A1). Dadurch wird zwar eine gewisse Toleranz gegenüber Kopfbewegungen des Betrachters erreicht, dies aber mit dem Nachteil, dass die bereits halbierte Auflösung in der einen Richtung noch weiter reduziert wird.

Aus der EP 0 836 332 B1 ist ein positionsadaptiver autostereoskopischer Monitor (PAM) mit einem vertikalen Trennraster bekannt. Es wird ein Adaptionsverfahren zur Anpassung des autosteroskopischen Bildinhalts an seitliche Betrachterbewegungen mit geringfügigen Änderungen des Einblickswinkels beschrieben, bei dem ganze darzustellende Bildpunkte subpixelweise verschoben werden, wobei ein oder zwei dunkel getastete Subpixel als Verschiebereserve genutzt werden. Das Verfahren bedient sich danach pro Bildpunkt vier oder fünf horizontal nebeneinander liegender Subpixel. Durch das Verschieben ganzer Bildpunkte kommt es für den Betrachter bei seitlichen Kopfbewegungen jedoch zu deutlich wahrnehmbarem Umschalten der Bilddarstellungen. Außerdem werden durch die Dunkeltastung auch sichtbarer Subpixel die Helligkeit und die Auflösung des Bildinhaltes verringert. Weiterhin ist ein Tracking des Bildinhalts bei Abstandsänderungen des Betrachters vom Bildschirm weg durch eine Verkleinerung des Bildes mittels Projektor-Shift auf den Bildschirm zu vorgesehen. Außerdem wird das Einfügen von fünften, dunkel getasteten Subpixel zur Adaption eines dichter am Bildschirm befindlichen Betrachters genutzt.

Aus der DE 198 27 590 C2 ist ein autostereoskopisches Verfahren bekannt, bei dem Positionsänderungen durch eine redundante Darstellung der Bildansichten kompensiert werden sollen. Dadurch soll es gelingen, jedem Auge des Betrachters auch dann die richtige und vollständige Bildinformation anzubieten, wenn die Betrachtungsposition innerhalb gewisser Grenzen variiert wird, ohne dass das Barrierenraster nachjustiert werden muss. Dieses Verfahren ist auch bei schräg angeordneten Subpixeln eines Bildpunkts anwendbar, allerdings werden die Subpixel dabei im Zeitmultiplex angesteuert.

Der nächstliegende Stand der Technik, von dem die vorliegende Erfindung ausgeht, wird in der WO 98/27451 A1 offenbart. Es wird eine Methode zur Bildnachführung bei ausschließlich horizontalen Parallelbewegungen (zum Matrixbildschirm) des Betrachters beschrieben. Dazu wird die Intensität (Helligkeitswert) der Farbe eines Subpixels dem n-Farbsubpixel entfernten gleichfarbenen Farbsubpixel in der gleichen Bildzeile übertragen, wobei jedes Pixel n Subpixel umfasst. Somit sind bei dem bekannten Matrixbildschirm immer mindestens die horizontal zwischen zwei gleichfarbigen Subpixeln auftretenden Subpixel nötig, um die Anzahl n für ein Pixel zu bilden, da sonst die Farbinformation nicht als Helligkeit zwischen zwei gleichfarbenen Subpixeln umverteilt werden kann. Als Weiterführung wird eine auf einzelne Subpixel bezogene Schwerpunktmethode vorgeschlagen, mit der das sehr abrupte Springen vermieden werden soll, indem die Intensität in Zwischenstufen zwischen gleichen Farbsubpixeln umverteilt wird. Bei diesem Umverteilen kommt es zu einem unerwünschten Übersprechen in den jeweils benachbarten Kanal. Als Möglichkeiten der Verringerung dieses Übersprechens wird eine Erweiterung jedes Pixels um eine Subpixelreserve von einem Subpixel (Subpixel pro Pixel n+1) vorgeschlagen, sodass die beiden Randplätze jedes Pixels immer mit Subpixeln dergleichen Farbe belegt sind. Dann wird die Summenintensität der jeweils außen liegenden Subpixel so eingestellt, dass sie der des Farbauszuges (Rot, Grün oder Blau) des darzustellenden Bildpunktes entspricht.

Weiterhin wird bei dem zuvor erläuterten bekannten Verfahren eine gewisse Toleranz gegenüber Abstandsänderungen des Betrachters impliziert. Beispielsweise bei einer Entfernung vom Matrixbildschirm sieht der Betrachter jeweils nur noch einen Prozentsatz der beiden Randsubpixel und damit von deren Intensität. Der Farbanteil der beiden Randsubpixel ist zusammen somit kleiner als 100%. Das könnte durch eine Veränderung des jeweiligen Intensitätswertes ausgeglichen werden. Es wird aber ausgeführt, dass sich für die Standardausführungen der Breitenanteil der Randsubpixel im Bildausschnitt aber nur um wenige Prozent verringert, sodass der Betrachter auch ohne Intensitätsausgleich weiterhin ein in etwa gleich gutes Bild sieht. Dies soll auch für größere Abstandsänderungen des Betrachters vom Bildschirm gelten. Diese beschriebene Toleranz des Verfahrens gegen eine Bewegung in größere Tiefe wird also mit einer "Abschattung" erkauft. Die Wahrnehmbarkeit der dabei einsetzenden Verfärbung der sichtbaren Bildpunkte ist im Falle von n Subpixeln und einem Reservesubpixel durch gegenläufige Verfärbung der Nachbarpixel nicht so gut wahrnehmbar. Es entsteht dabei jedoch ein Konvergenzfehler, der an Kanten und abrupten Farbwechseln besonders auffällig wird. Es handelt sich bei der Tiefenkompensation somit nicht um ein elektronisches Tracking zur Kompensation von Abstandsänderungen, sondern um ein Verfahren, das auf der Möglichkeit basiert, die Stereoraute (Sweetspot) theoretisch um 1/3 zu erweitern.

## Aufgabenstellung

Die **Aufgabe** für die vorliegende Erfindung ist daher darin zu sehen, ein gattungsgemäßes Verfahren der eingangs genannten Art anzugeben, das eine fließende, kontinuierliche elektronische Bildnachführung ohne wahrnehmbare Umschalteffekte bei allen Kopfbewegungen des Betrachters parallel und im Abstand zum Matrixbildschirm mit gleich bleibend hoher Abbildungsqualität hinsichtlich Bildauflösung, Kanalübersprechen oder anderen Störeffekten gewährleistet. Dabei soll das Verfahren einfach sein und in Echtzeit arbeiten, störresistent und mit kommerziell am Markt erhältlichen Mitteln, d.h. kostengünstig umsetzbar sein. Die **Lösung** für diese Aufgabe ist dem Hauptanspruch zu entnehmen. Vorteilhafte Weiterführungen der Erfindung werden in den Unteransprüchen aufgezeigt, die im Folgenden im Zusammenhang mit der Erfindung näher erläutert werden.

Bei dem erfindungsgemäßen Verfahren werden zur Erzielung einer kontinuierlichen Nachführung der Bildinformation bei freien räumlichen Bewegungen des Betrachters bei mit Barrierenrastern ausgestatteten Matrixdisplays, in denen in den Bildzeilen jeweils n Subpixel einschließlich einer Subpixelreserve (also n bevorzugt 2 oder 3 Subpixel) horizontal einer Ansicht angehören und bei denen die Bildpunkte für den Betrachter aus der Überlagerung der Subpixel, gegebenenfalls auch mit vertikal benachbarten Subpixel sichtbar werden, Tracking-Reserven geschaffen. Dabei werden jedoch nicht nur die Subpixelreserven in einer Subpixelgruppe (definiert als diejenigen Subpixel in einem Pixel, die direkt benachbart in einer Bildzeile nebeneinander liegen) eingesetzt, sondern auch benachbarte Subpixel aus benachbarten Subpixelgruppen mit anderen Bildinformationen. Um diese an den Einblickswinkel des Betrachters in seiner augenblicklichen Betrachtungsposition anzupassen, werden sie in ihrer Intensität (Helligkeit des Farb- oder Grauwertes des jeweiligen Subpixels) nach Maßgabe einer Schwerpunktmethode verändert. Dabei bezieht sich die angewandte Schwerpunktmethode aber nicht auf einzelne Subpixel, sondern auf ganze Subpixelgruppen in den Bildzeilen. Bei einer Bewegung des Betrachters werden diese Schwerpunkte der Subpixelgruppen in den Bildzeilen durch eine an die Art und Größe der Bewegungsänderung angepasste Intensitätsumverteilung des Subpixel auf stets direkt benachbarte - und damit andere Farb- oder Grauwerte zeigende - Subpixel in benachbarten Subpixelgruppen mit anderen Bildinformationen verschoben (Parallelbewegungen des Betrachters zum Matrixbildschirm) oder gespreizt oder gestaucht (bei Abstandsänderungen des Betrachters zum Matrixbildschirm). Die in der Regel bislang durch Veränderung des Matrixbildschirms umgesetzte Nachführung der Bildinformationen (insbesondere das Shiften der Bildinformation bei Abstandsänderungen) wird damit durch eine vollständig elektronische Nachführung ersetzt, bei der die Bildinhalte durch einfache Intensitätsumverteilung, die bevorzugt durch einfache Multiplikation der normierten Intensitätswerte der Subpixel mit in Abhängigkeit von der Bewegungsänderung des Betrachters in Echtzeit errechneten Intensitätsfaktoren, analog gedehnt oder gestaucht werden.

Dazu ist bei der Erfindung vorgesehen, zunächst Intensitätsschwerpunkte der Subpixelgruppen durch eine Reduzierung der Gesamtintensität des Matrixbildschirmes auf mindestens einen Wert $(n-1)/n$ der Gesamtintensität (mit n = Anzahl der Subpixel einschließlich Subpixelreserve in einer Subpixelgruppe) zu bilden. Diese Reduzierung der Gesamtintensität, die dem Betrachter wesentlich weniger auffällt als beispielsweise eine Halbierung der Auflösung, ist erforderlich, um eine Erhöhung der Intensität auch für Subpixel zuzulassen, die in der Ausgangsposition des Betrachters ohne eine Bildnachführung eine maximale Intensität (=1, auf die die Intensitätsfaktoren normiert werden können) aufweisen. Mit anderen Worten muss zunächst die Intensität aller Subpixel des Matrixbildschirms soweit reduziert werden, dass die Summenintensitäten jeder Subpixelgruppe mindestens um den Anteil der Intensität eines Subpixels erniedrigt wird.

Anschließend werden diese Intensitätsschwerpunkte der Subpixelgruppen unter Beibehaltung der reduzierten Gesamtintensität in den Subpixelgruppen in den Bildzeilen seitlich in den Bildzeilen kontinuierlich verschoben oder gespreizt oder gestaucht. Allgemein hängt die Stärke der Verschiebung, Spreizung oder Stauchung von der Größe der Positionsänderung ab. Weiterhin hängt sie von der Art der Positionsänderung ab. Bei Parallelveränderungen, horizontal und vertikal, erfolgen immer proportionale Intensitätsanpassungen. Diese sind bei in Bezug auf den Betrachter hinter dem Matrixbildschirm angeordnetem Barrierenraster, beispielsweise als Beleuchtungsmatrix in Form eines Beleuchtungsstreifenrasters, mitläufig und bei vor dem Matrixbildschirm angeordnetem Barrierenraster gegenläufig zur Parallelbewegung. Bei Abstandsänderungen können die Intensitätsumverteilungen auch umgekehrt proportional sein. Das hängt wiederum davon ab, ob das Barrierenraster vor oder hinter dem Matrixbildschirm angeordnet ist. Bei detektierten Abstandsänderungen der Kopfposition des Betrachters zum Matrixbildschirm werden die Intensitätsschwerpunkte bei einer Anordnung des Barrierenrasters vor dem Matrixbildschirm umgekehrt proportional und bei einer Anordnung des Barrierenrasters hinter dem Matrixbildschirm proportional zu einer Annäherung und zunehmend zu den Seitenrändern des Matrixbildschirms gespreizt und zu einer Entfernung gestaucht. In allen Fällen kann das Barriereraster zur Trennung der Einzelansichten beispielsweise in Form von Streifen-, Stufen- oder Lochraster ausgebildet sein.

Dabei ist bei der Veränderung der Intensitätsschwerpunkte ganzer Subpixelgruppen bei der Erfindung wesentlich, dass die Verschiebung, Spreizung oder Stauchung der Intensitätsschwerpunkte der Subpixelgruppen immer über in den Bildzeilen direkt benachbarte Subpixel und in Abhängigkeit von der Größe der Parallel- und Abstandsänderung auch über die Grenzen zwischen benachbarten Subpixelgruppen der unterschiedlichen Stereobildansichten hinweg erfolgt und freiwerdende Subpixel in die benachbarte Subpixelgruppe der jeweils anderen Stereobildansicht einbezogen werden.

Das Grundprinzip der Erfindung basiert somit auf der Idee, in einem Barriereverfahren mit alternierender Verschränkung von linker und rechter Stereobildansicht in jeder abzubildenden Subpixelgruppe zunächst eine horizontale Subpixelreserve zu schaffen. Dazu werden bevorzugt Barrierenverfahren benutzt, bei denen die Subpixel in vertikaler Erstreckungsrichtung der Barrierenelemente in den verfügbaren Primärfarben alternieren und horizontal mehrere zur gleichen Ansicht gehörende Subpixel vorhanden sind. Üblicherweise ist das bei vertikaler Erstreckung des Strahlteilers bei Mosaikanordnung der Subpixel und bei seitlich gekippter Erstreckung des Strahlteilers bei Matrix- und Mosaikanordnung der Subpixel der Fall. Zur Schaffung der Trackingreserve wird die Intensität aller Subpixel um einen Anteil reduziert, der dem eines Subpixels innerhalb horizontal nebeneinander liegender, zur gleichen Stereoansicht gehörender Subpixel entspricht. Bei n Subpixel in einer Subpixelgruppe sind alle Subpixelintensitäten also um 1/n zu reduzieren. Die dabei eingetretene Gleichverteilung der Intensitätsfaktoren wird bei exakt ausgerichteter Barriere als Startwert für die Trackingsituation bei nominalem Kopfabstand und mittiger Positionierung verwendet, auch wenn seitlich versetzt noch eine gleichwertige, bei seitlicher Bewegungsanpassung ebenfalls symmetrische Intensitätsverteilung vorliegt. Darauf basierend werden die Intensitätsfaktoren abhängig von der aktuell eingenommenen Kopfposition verändert, wodurch sich der Intensitätsschwerpunkt der horizontal hinter einer Barrierenöffnung liegenden Subpixelgruppe gegenüber der Barrierenöffnung verschiebt.

Bei der Verwendung des Begriffes "Subpixelgruppe" im Zusammenhang mit der vorliegenden Erfindung sollen Bildelemente verstanden werden, die zumindest horizontal benachbart sind und zu einer Ansicht gehörende Bildinformationen tragen. Solche Bildinformationen können Pixelinformationen oder Subpixelauszüge aus Pixelinformationen sein. Dabei werden bei dem erfindungsgemäßen Verfahren keine Bildinhalte an benachbarte Subpixel weitergeschoben. Vielmehr werden die Bildinformationen durch Bildung von ortsrichtigen, subpixelgenauen Auszügen der jeweiligen Ansicht gewonnen. Bei dieser Methode stimmt die Adresse jedes Subpixels im aktuellen Subpixelauszug mit der Subpixeladresse im jeweiligen Stereobild, aus dem es stammt, überein. In den Matrixbildschirm eingeschriebene Farbinformationen korrelieren also stets mit der Bildadresse der betreffenden Ansicht, die dann der aktuellen Kopfposition des Betrachters nur durch eine Intensitätsänderung angepasst wird. Innerhalb der Subpixelgruppe wird also nur die Intensitätsverteilung entsprechend der Augenpositionen dem Betrachter nachgeführt. Dabei erfolgt eine seitliche Nachführung und in gewissen Grenzen eine Nachführung der Distanz auch über die seitliche Begrenzung der einzelnen Subpixelgruppen hinweg, indem nicht mit Intensität (Intensitätsfaktor Null) belegte benachbarte, ursprünglich für die Nachbaransicht genutzte Subpixel benutzt und mit der diesen Adressen entsprechenden Bildinformation der betreffenden Ansicht belegt werden.

Eine Nachführung bei Abstandsänderungen erfolgt unter Ausnutzung von Subpixelreserven innerhalb der Subpixelgruppen und über diese hinaus. Die Änderung der Intensitäten kann dabei in besonders einfacher Weise durch Einführung von individuellen Intensitätsfaktoren bei der Ansteuerung der einzelnen Subpixel erreicht werden. Diese individuellen Intensitätsfaktoren dienen dabei ebenfalls einer Erhöhung oder Verringerung der Intensitäten der einzelnen Subpixel. Für jede Positionsänderung des Betrachters werden ortsabhängige Intensitätsfaktoren ermittelt. Alle ermittelten Intensitätsfaktoren zur Nachführung der Betrachterbewegung zur Seite und in der Tiefe können über eine Gewichtungsfunktion in einem subpixelindividuellen Gesamtintensitätsfaktor überlagert werden. Die Ermittlung der Intensitätsfaktoren und die Beeinflussung der Intensitätsansteuerung der Subpixel erfolgt dabei rein elektronisch in Echtzeit, sodass dem Betrachter eine ruckfreie Bildnachführung bei Kopfbewegungen angeboten werden kann.

Mit dem erfindungsgemäßen Verfahren können Parallelveränderungen und Abstandsveränderungen des Betrachters zum Matrixbildschirm ruckfrei kompensiert werden. Bei einem Barriereraster, das vertikale Barrieren aufweist, die parallel zu den Bildspalten und zu den horizontal benachbarten Subpixeln, zwischen denen die Intensitätsschwerpunkte verlagert werden, angeordnet sind, erfordert eine vertikale Änderung der Kopfposition gegenüber der mittigen Kopfposition keine Kompensation, da vom Betrachter über die horizontalen Barrieren keine anderen Bildeinsichten wahrgenommen werden. Bei einem schräg zu den Bildzeilen verlaufenden Barrierenraster (slanted raster) wird durch die schräg zu den Bildzeilen verlaufenden Barrieren auch bei einer vertikalen Änderung der Kopfposition eine Kompensation erforderlich, da in die jeweils benachbarten Bildansichten Einblick erhalten wird. Gleiches gilt auch für schräge in einem Pixel verlaufende Subpixel (vergleiche auch weiter unten). Somit ist es vorteilhaft, wenn bei dem Verfahren nach der Erfindung bei Parallelveränderungen vor einem schräg verlaufenden Barrierenraster oder schräg verlaufenden Subpixeln in einem Pixel auch bei Vertikalveränderungen der Kopfposition ein Intensitätsfaktor ermittelt wird, der den anderen Intensitätsfaktoren überlagerbar ist. Für Barrierenraster, die gegenüber dem Matrixbildschirm eine Schrägstellung aufweisen, oder für schräge Subpixelverläufe ist somit im Verfahren nach der Erfindung vorgesehen, Abweichungen der Betrachterposition nach oben oder unten in eine anstiegsabhängige seitliche Verlagerung der Intensitätsschwerpunkte zu überführen.

Mit dem erfindungsgemäßen Verfahren können somit beliebige Veränderungen der Kopfposition aus der Überlagerung der aus der Abstandsänderung sowie den horizontalen oder auch vertikalen Veränderungen der Kopfposition resultierenden Anpassungen der Intensitäten der Subpixel zur Veränderung der Intensitätsschwerpunkte der Subpixelgruppen kompensiert werden. Dem Betrachter wird durch das erfindungsgemäße Verfahren eine natürliche Betrachtung ohne Bewegungseinschränkung ermöglicht und damit ein hoher Komfort geboten. Insbesondere bietet das erfindungsgemäße Verfahren erstmalig auch eine Nachführung von vertikalen Änderungen der Kopfpositionen an, die bei schrägen Barriererastern kompensiert werden müssen. Es können aber auch gezielt nur einzelne Positionsveränderungen kompensiert werden. Bei einer überlagerten, drei- oder zweifachen Kompensation werden die jeweils ermittelten, vorzeichenbehafteten Intensitätsfaktoren addiert. Bei einer einfachen Kompensation werden sie entsprechend einzeln berücksichtigt.

Die Anpassung der Intensitäten der Subpixel an die aktuelle Kopfposition des Betrachters mittels einer Multiplikation mit dem ermittelten Intensitätsfaktor bedingt eine Erhöhung (Intensitätsfaktor größer 1) oder eine Verringerung (Intensitätsfaktor kleiner 1) der aktuellen Intensität jedes Subpixels. Weist das entsprechende Subpixel aber bereits eine maximale Intensität auf, kann keine weitere Erhöhung mehr erfolgen. Daher ist es sinnvoll, wenn zur Erzeugung einer Helligkeitsreserve die Farbintensitäten aller Subpixel vor der Ermittlung der Intensitätsschwerpunkte zunächst um einen konstanten Faktor verringert werden. Weist das entsprechende Subpixel bereits eine minimale Intensität auf, ist es schwarz und kann keine weitere Verringerung, sondern nur noch eine Aufhellung erfahren. Insbesondere werden innerhalb einer Subpixelgruppe vorhandene Subpixelreserven, die zunächst schwarz sind, da ihnen im Subpixelauszug kein Bildinhalt zugewiesen wurde, dazu genutzt, im Rahmen der Verlagerung der Intensitätsschwerpunkte in ihrem ihnen zugewiesenen Farbwert (polychrom, monochrom) aufgehellt zu werden. Eine Helligkeitsreserve ist hier nicht angebracht und würde zur Verfälschung der linken und rechten Stereobildansichten führen. Weiterhin können vorteilhaft die ermittelten Intensitätsfaktoren auf einen mittigen Abstand der Kopfposition des Betrachters zum Matrixbildschirm normiert sein. Weitere Ausführungen hierzu sind dem speziellen Beschreibungsteil zu entnehmen.

Zusammenfassend gliedert sich das Verfahren nach der Erfindung in mehrere Abschnitte:

## Initialisierung und Abgleich

Allgemein wird zunächst eine Reduzierung der Gesamtintensität des Matrixbildschirmes auf mindestens einen Wert $(n-1)/n$ der Gesamtintensität (mit n = Anzahl der Subpixel in einer Subpixelgruppe einschließlich der Subpixelreserve) durchgeführt. Mit anderen Worten wird die Intensität aller Subpixel des Matrixbildschirms soweit verringert, dass die Gesamtintensität jeder Subpixelgruppe mindestens um den Anteil einer Subpixelintensität abgesenkt wird. Für eine bevorzugte Ausführungsform des Verfahrens nach der Erfindung wird vor Beginn der Faktorisierung zur Bildung einer Helligkeitsreserve die Intensität aller Subpixel der gerasterten Bildansichten auf $\leq 50\%$ herabgesetzt. Das wird beispielsweise durch Reduzierung der Bitzahl jedes adressierbaren Subpixels beispielsweise um ein Bit oder durch Dunkeltastung je eines Subpixels in jeder Subpixelgruppe erreicht. Letzteres stellt die bevorzugte Verfahrensvariante dar, da sie einfach und mit weniger Verfahrensschritten realisierbar ist. Die Verringerung der Anzahl darstellbarer Farben wird in der Regel durch die mit der Anordnung der Subpixel in Gruppen verbundene Redundanz kompensiert.

Eine Absenkung der Intensität zur Bildung einer Helligkeitsreserve ist erforderlich, um für eine Bildnachführung an veränderte Kopfpositionen des Betrachters die Intensitätsschwerpunkte einer Subpixelgruppe verlagern zu können. Dabei kann eine auf die maximale Intensität normierte Intensität der Subpixel bei einer Ausgangs-Betrachterposition, d.h. mittig vor dem Matrixbildschirm bzw. dem Barrierenraster für einen nominalen Abstand des Betrachters, beispielsweise mit einem Intensitätsfaktor $I_n \leq 0,5$ für jeweils zwei Subpixel breite linke und rechte Bildstreifen definiert werden. Bei der Betrachtung der horizontalen Verteilung der Intensität beträgt die Summe der einer Barrierenöffnung zugeordneten Intensitätsfaktoren $I_n$ einer Bildansicht dann normiert $I_{ges}=1$. Das Verhältnis der Intensitäten zweier direkt benachbarter Subpixel beträgt dementsprechend 0,5 : 0,5 (bei drei benachbarten Subpixeln pro Bildansicht wäre es entsprechend 0,25 : 1,0 : 0,25).

Um die Gesamthelligkeit des Matrixbildschirms besser zu nutzen, kann das Verfahren nach der Erfindung in der Variante, in der je Bildansicht drei Subpixel horizontal in einer Linie hinter der Barrierenöffnung liegen, so modifiziert werden, dass die Intensitätsfaktoren $I_n$ in der mittigen Betrachtungsposition im Verhältnis 0,5 : 1,0 : 0,5 aufgeteilt sind. In diesem Fall ergibt sich eine Reduzierung der Gesamthelligkeit auf zwei Drittel der ursprünglichen Helligkeit.

Da der Verlauf der Intensitätsfaktoren $I_n$ von mehreren Stellen des Matrixbildschirmes aus symmetrisch ist, kann die Ausgangsposition auch bei einer anderen Verteilung der Intensitätsfaktoren $I_n$ festgelegt werden. Diese ergibt sich bei einer Intensitätsverteilung von 1,0 : 0,0 bzw 1,0 : 1,0 : 0,0. Der Betrachter ist auch in diesen Fällen mittig zur Intensitätskurve positioniert.

## Faktorisierung durch Nachführen und Ermittlung der Intensitätsschwerpunkte der Subpixelgruppen .....

Bei einer Positionsänderung des Betrachters wird die Intensität jedes Subpixels mit Intensitätsfaktoren $0 \leq I_n \leq 1$ multipliziert, wobei die Summe der Intensitätsfaktoren der Subpixel innerhalb einer Subpixelgruppe konstant ist und deren Einzelwerte horizontal so verteilt werden, dass sich eine die Betrachterbewegung kompensierende Verlagerung der Intensitätsschwerpunkte ergibt.

## ...bei Nachführen von Parallelveränderungen

Bei dem Verfahren nach der Erfindung ist vorgesehen, dass bei einer Parallelveränderung (horizontale Kopfbewegungen und zusätzlich vertikale Kopfbewegungen bei schrägem Barrierenraster oder schräg angeordneten Subpixel in einem Pixel) der Kopfposition alle Intensitäten der Subpixel innerhalb einer Subpixelgruppe durch Multiplikation mit den Intensitätsfaktoren In um einen konstanten Intensitätswert umverteilt werden. Entspricht die Parallelveränderung der Kopfposition beispielsweise in einer Anordnung mit zwei Subpixeln Bildstreifenbreite beispielsweise der Verlagerung um 20 % eines Subpixels nach links, so werden 20% der Gesamtintensität in der Subpixelgruppe umverteilt und es ergibt sich ein Verhältnis der Intensitätsfaktoren von 0,4 : 0,6. Das bedeutet, dass in dem Maße, in dem das eine Subpixel eine Aufhellung erfährt, das direkt benachbarte Subpixel abgedunkelt wird. Die Gesamtintensität in der Subpixelgruppe mit einem $I_{ges}$ = 1 bleibt dabei erhalten, es erfolgt eine seitliche Verlagerung des Intensitätsschwerpunkts der Subpixelgruppe proportional zur Kopfbewegung.

Die Verschiebung des Intensitätsschwerpunkts der Subpixelgruppe erfolgt gegenläufig zur Kopfbewegung des Betrachters, wenn dieser durch fest stehende Barrierenöffnungen hindurch auf den Matrixbildschirm blickt. Jeweils das im Bildstreifen äußere, in Bewegungsrichtung liegende Subpixel wird dann mit einem proportional zum zurückgelegten Weg verringerten Intensitätsfaktor In multipliziert. Entsprechend wird das gegenüberliegend äußere Subpixel mit einem proportional zu diesem Weg erhöhten Intensitätsfaktor multipliziert. Aus der Summenformel für eine Kompensation von Positionsänderungen in allen drei kartesischen Raumrichtungen

$$I_{ind\_1} = I_x + I_y + I_{ind\_z}$$

mit

.

$$I_{ind\_1} + I_{ind\_2} = konst = I_{ges}$$

ergibt sich dann der Intensitätsschwerpunkt einer zwei Subpixel breiten Subpixelgruppe (n=2) zu

$$IS = Abs\ (I_{ind\_1} - I_{ind\_2})\ /\ SI_n\ .$$

Ist zum Beispiel in einem in einer Subpixelgruppe der rechten Ansicht außen liegenden Subpixel der maximale Intensitätsfaktor bereits erreicht, wird zur Verlagerung des Intensitätsschwerpunkts bei noch größeren Betrachterbewegungen das nunmehr mit dem Intensitätsfaktor 0 multiplizierte benachbarte Subpixel aus der Subpixelgruppe für die linke Ansicht genutzt, um ebenfalls Inhalte der rechten Ansicht mit Intensitätsfaktoren beaufschlagt darzustellen. Das ursprünglich benutzte, andere außen liegende Subpixel wird daraufhin für die andere benachbarte Subpixelgruppe der linken Ansicht frei. Auf diese Weise wird über die Subpixelgruppe hinweg der Bildinhalt nachgeführt. Die Bildinformation des neu genutzten Subpixels wird dabei vorzugsweise einem geeigneten anderen Subpixelauszug entnommen. Eine Modifizierungsmöglichkeit für das Verfahren ist in der Verschiebung der Information aus dem aufzugebenden Subpixel der Subpixelgruppe in das neu gewonnene Subpixel gegeben. Entstehende Lücken zwischen den Subpixelgruppen werden nicht mit Bildinhalten belegt.

**... bei Nachführen von Abstandsänderungen**

Weiterhin kann mit dem erfindungsgemäßen Verfahren Abstandsänderungen des Betrachters zum Bildschirm elektronisch fließend gefolgt werden. Nähert der Betrachter sich einem Matrixbildschirm mit vorgelagertem Barrierenraster, muss der Bildinhalt eine zu den Bildschirmrändern hin zunehmende Spreizung erfahren, da der Betrachter in die seitlichen Barrieren zunehmend schräger einblickt und die Einblickswinkel flacher werden. Vergrößert der Betrachter seinen Abstand zum Bildschirm, werden seine Einblickswinkel in die seitlichen Barrieren zunehmend steiler und der Bildinhalt muss zu den Rändern hin zunehmend gestaucht werden.

Bei der elektronischen Abstandsnachführung werden Spreizung und Stauchung der Bildinformation durch eine zu den Seitenrändern hin zunehmende Verlagerung der Intensitätsschwerpunke der Subpixelgruppen erreicht. Dazu ist vorgesehen, dass bei einer Abstandsänderung der Kopfposition der Intensitätswert jedes Subpixels mit einem vom Abstand abhängigen individuellen Faktor multipliziert wird (Gewichtungsfunktion). Dadurch kann der Schwerpunkt der Intensität innerhalb jeder Subpixelgruppe individuell seitlich verlagert werden. Die Gewichtungsfunktion wird so eingestellt, dass alle Schwerpunkte den gleichen seitlichen Abstand zu einander haben, also äquidistant sind. Durch Variation dieses Abstandes können die Stereozonen der Betrachterposition angepasst werden. Der Abstand der Intensitätsschwerpunkte s hängt dabei ab vom Abstand L der Barrierenelemente (pitch), von der Betrachterentfernung z zum Matrixbildschirm und vom Abstand a zwischen dem Matrixbildschirm und den Barrierenelementen. Er ergibt sich zu

$$s = \tfrac{1}{2}\ \cdot L \cdot (1 - a\ /\ z).$$

Weiterhin ist das Verfahren nach der Erfindung bevorzugt auch bei einer zeitsequenziellen Darstellung der Bildansichten anwendbar, insbesondere bei Verwendung eines schaltbaren Barriererasters, bei dem zwischen den Subpixeladressierungen die Positionen der Barrierenelemente um einen, im wesentlichen von der Subpixelrasterung abgeleiteten, Betrag verschoben werden. Zur Umsetzung dieser Verfahrensmodifikation ist beispielsweise die Kombination eines Matrixbildschirms mit einer erhöhten Bildfrequenz (z.B. 120 Hz oder schneller) und einem schnell schaltbaren Barriereraster vorteilhaft, da der Betrachter stereoskopische Ansichten der linken und rechten Bildansicht dann in der vollen nativen Auflösung des Matrixbildschirms flimmerfrei wahrnimmt.

Das Verfahren nach der Erfindung ist bei unterschiedlichen Subpixelformationen und -gestaltungen durchführbar. Es können Bildschirme verwendet werden, bei denen die Subpixel einer Farbe vertikal (Matrixanordnung) oder schräg mit einem Versatz von einem Subpixel über die Bildzeilen zu Pixel gruppiert sind (Mosaikanordnung). Bei einer schrägen Gruppierung der Subpixel einer Farbe, beispielsweise mit einem Versatz von einem Subpixel pro Bildzeile, können sowohl senkrechte als auch schräge Verläufe des Barrierenrasters mit dem erfindungsgemäßen Verfahren betrieben werden. Bei einer vertikalen Gruppierung der Subpixel einer Farbe findet das Verfahren Anwendung wenn das Barrierenraster gegenüber den Pixelspalten mit einem Anstieg von einem Subpixel geneigt zu den Bildspalten (slanted raster) verläuft. Die in der Richtung der Barrierenöffnungen liegenden Subpixel haben bei diesen Anordnungen abwechselnd die Farben Rot, Grün und Blau. Dazu wurde bereits im Stand der Technik (vergleiche **DE 10 2004 059 729 B3**, deren Offenbarungsgehalt durch das Zitat ausdrücklich in die vorliegende Erfindung aufgenommen sein soll) ausgeführt, dass die Verwendung von schrägen Barrierenrastern vorteilhaft ist, da insbesondere eine symmetrische stereoskopische Bildauflösung auf dem Matrixbildschirm erreicht wird. Zusätzlich ist bekannt, dass das Übersprechen zwischen den einzelnen Bildkanälen verringert werden kann, wenn zwischen den Kanälen Subpixelreserven eingeführt werden. Vorteilhaft auch bei dem Verfahren nach der Erfindung ist es daher, wenn bei Verwendung eines schrägen Barrierenrasters, bei dem die Barrierenelemente mit einem dem kleinen Seitenverhältnis der Subpixel entsprechenden Anstieg schräg zur Matrix des Bildschirms verlaufen, die Subpixel der Farben Rot, Grün und Blau und die Subpixelreserve für einen Bildpunkt einen bildzeilenweisen Versatz von einem Subpixel in Anstiegsrichtung des optischen Barrierenrasters zueinander aufweisen. Somit existieren verschiedene Möglichkeiten der Darstellung eines Bildpunkts mithilfe von Subpixeln.

In der Regel werden die Pixel aus Subpixeln der unterschiedlichen Farben Rot, Grün und Blau zusammengesetzt. Es können aber auch alle Subpixel übereinstimmende Farbeigenschaften besitzen, beispielsweise, wenn der Matrixbildschirm, wie im Falle eines monochromen Matrixbildschirms, keine Farbfilter enthält, sodass die zu einem Pixel gruppierten Subpixel monochrome Farbintensitäten aufweisen und einfarbig, insbesondere grau bzw. schwarz/weiß erscheinen. Auch in diesen Fällen findet das Verfahren nach der Erfindung Anwendung, indem bei der Beaufschlagung mit Intensitätsfaktoren wie für den Fall ungleichfarbiger Subpixel verfahren wird. Gleiches trifft auch zu für Bildschirme mit farbsequenzieller Darstellung oder mit farbadditiver Bildwiedergabe (stacked display), bei denen sich eine Mischfarbe im Pixel ergibt. In diesem Fall wird das für Subpixel beschriebene Verfahren auf Pixel angewendet.

Weiterhin können bei dem erfindungsgemäßen Verfahren vorteilhaft die gerasterten Subpixelauszüge nach Vorgabe von an die aktuelle Kopfposition angepassten Multiplexschemata erzeugt werden, wobei nur solche Multiplexschemata zur fortlaufenden Bildung der Subpixelauszüge eingesetzt werden, die keine ortsgleichen Subpixel aus der linken und der rechten Bildansicht aufrufen, also untereinander keine Redundanz aufweisen. Dadurch wird der vom Verfahren für die Bildung der Subpixelauszüge beanspruchte Speicherplatz gegenüber dem Stand der Technik reduziert. Weitere Ausführungen zur Nutzung spezieller Multiplexschemata bei einem schrägen Barriereraster sind wiederum der oben genannten **DE 10 2004 059 729** zu entnehmen. Gegenüber der dort vorgestellten Methode zeigt das, mit der vorliegenden Erfindung beanspruchte Verfahren den signifikanten Vorteil, dass nur die Hälfte (bei einem Subpixel Reserve) oder sogar nur ein Drittel (bei zwei Subpixel Reserve) des Speicherplatzes für die gerasterten Bildansichten benötigt wird, da nurmehr Multiplexschemata verwendet werden, die keine identischen Subpixel aufrufen, sondern nahtlos aneinander anschließen.

Wesentliches Merkmal des Verfahrens nach der Erfindung ist das elektronische Nachführen der aktuellen autostereoskopischen Bildinformation an die aktuelle Position der Betrachteraugen. Vorteilhaft kann die Bestimmung der aktuellen Augenposition durch Einbeziehung eines bevorzugt videobasierten Detektionsverfahrens zum Auffinden von Kopf- oder Augendetails des Betrachters erfolgen. Solche Detektionsverfahren sind allgemein bekannt und zuverlässig entwickelt. Sie können ohne weitere Belastung des Betrachters, wie beispielsweise durch Markierungen am Betrachterkopf, arbeiten und vermindern dadurch nicht den Anwenderkomfort. Im Gegensatz dazu erhöhen sie diesen, da durch das elektronische Tracking bei dem Verfahren nach der Erfindung Kopfbewegungen des Betrachters zugelassen werden, ohne dass dieser dabei die Stereozone einer Bildperspektive verlässt. Videobasierte Trackingverfahren arbeiten mit Videokameras zur Aufzeichnung der aktuellen Kopf- oder Augendetails, die entsprechend ausgewertet werden. Andere Detektionsverfahren ohne eine Videoaufzeichnung des Betrachters sind ebenfalls technisch ausgereift und einsetzbar.

Vorteilhaft beim Trackingverfahren ist eine dynamische Änderung der Aufnahmeeinstellung für die Bildansichten in Abhängigkeit der vom Trackingverfahren bestimmten aktuellen Augenposition. Neben einer autostereoskopischen Darstellung statischer Bildszenen ist das auch bei Darstellung von autostereoskopischen Bewegtbildern möglich. Vorteilhaft ist dabei eine dynamische Ablage der Bildansichten. Hierbei können Standardvideoformate benutzt und zur Adressierung der Subpixel ausgewertet werden. Weiterhin kann eine automatische Anpassung der Auflösung der Bildansichten an die Auflösung des Matrixbildschirms von Vorteil (Formatkonversion) sein, wie sie beispielsweise in der Software für übliche Computer-Betriebssysteme integriert ist. Bei dem Verfahren nach der Erfindung kann daher eine Zuführung der ermittelten Augen- oder Kopfposition an die das Bild erzeugende Einheit vorgesehen sein.

Die Durchführung des Verfahrens nach der Erfindung kann in einer Anordnung, wie sie aus der **DE 10 2004 059 729** bekannt ist, erfolgen. Insbesondere können ein rechter Speicher und ein linker Speicher sowie ein Multiplexspeicher zur Speicherung des aktuell gebildeten Subpixelauszugs, eine Recheneinheit zur Bildung des aktuellen Subpixelauszugs sowie zur Steuerung des Verfahrensablaufs und der einzelnen Anordnungskomponenten und zumindest ein, vorzugsweise videobasiertes, Trackingsystem zum Auffinden von Kopf- oder Augendetails eines Betrachters vorgesehen sein. Die Anpassung der Intensitäten erfolgt in der Regel in der Graphikkarte. Die Verlagerung dieser Funktion in das Display ist ebenfalls möglich, erfordert aber die Integration einer entsprechenden Elektronik ins Display. Um eine bei digitaler Ansteuerung der Subpixel des Displays mögliche Verringerung der Farbtiefe zu kompensieren, kann das Bild zeitlich und/oder örtlich gedittert werden.

**Ausführungsbeispiele**

Das Verfahren nach der Erfindung wird zu dessen weiterem Verständnis nachfolgend anhand der schematischen **Figuren** näher erläutert. Dabei zeigen:

**Figur 1**    Stereo-Kanalbreiten an einem schrägen Streifenraster,

**Figur 2**    Verlauf der Intensitäten in den Stereokanälen an einem schräg ansteigenden Barrierenraster mit einer Umverteilung der Intensität innerhalb einer Subpixelgruppe und über deren Grenze hinaus bei Parallelveränderungen der Kopfposition, '

**Figur 3**    ein Intensitätsdiagramm für eine Abstandsänderung,

**Figur 4**    Beispiele zur Umverteilung der Gesamtintensität in Subpixelgruppen,

**Figur 5**    Beispiele für die Bildung eines neuen Bildpunktes,

**Figur 6**    Ausschnitt aus dem Pixelfeld eines Panels mit Verlauf der Subpixelintensitäten,

**Figur 7**    Verhältnisse an gewichteten Subpixeln einer Subpixelgruppe und

**Figur 8**    Verhältnisse an einem Ausschnitt der Schnittdarstellung durch den Abbildungsstrahlengang an einem Matrixdisplay mit vorgelagerter Barriere.

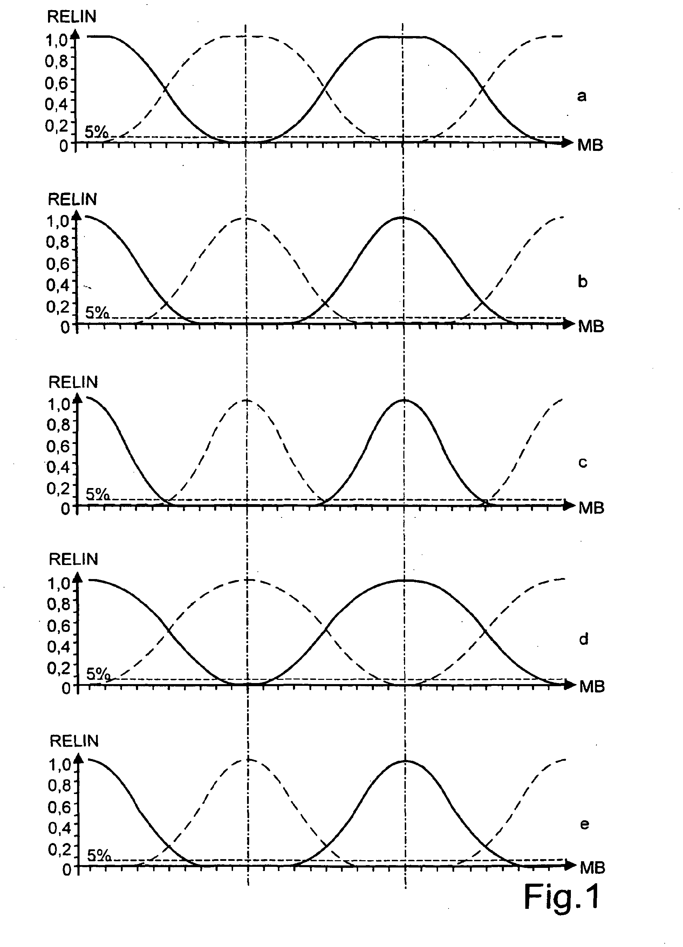

Die **Figur 1** zeigt die Stereokanalbreiten (relative Intensität RELIN über der Breite des Matrixbildschirms MB) an einem schrägen Barrierenraster mit einer unterschiedlichen Anzahl von Subpixeln und einer unterschiedlichen Anzahl von aktivierten Subpixeln in einer Subpixelgruppe. In a, b und c ist die Subpixelgruppe n= 3 Subpixel breit. In a sind alle 3 Subpixel aktiv, in b nur 2, in c nur 1 Subpixel. In d und e ist die Subpixelgruppe n=2 Subpixel breit. In d sind alle beide Subpixel und in e nur 1 Subpixel aktiv. Deutlich ist die jeweils abnehmende Kanalbreite zu erkennen. Die Kanäle liegen einen Augenabstand P auseinander. Die dicke Kurve stellt die Intensität des Nutzsignals, die dünne Kurve die Intensität des Übersprechens am jeweiligen Aufenthaltsort des Betrachters dar. Die Schnittpunkte mit der 5 % Linie charakterisieren die nutzbare Kanalbreite.

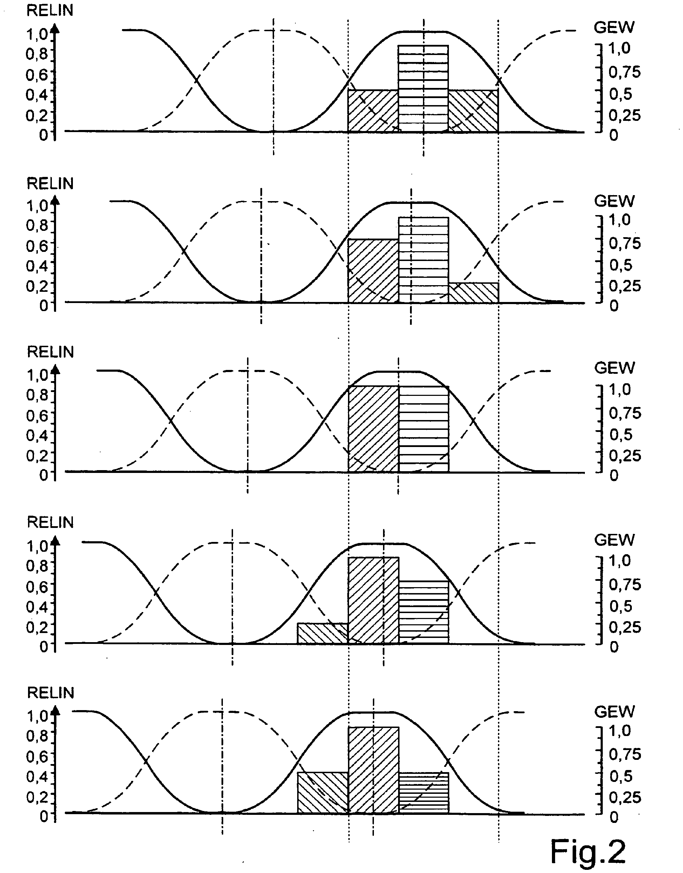

**Figur 2** zeigt den Verlauf der Intensitäten in den Stereokanälen gemäß Figur 1 für den Fall von drei leuchtenden Subpixel in einer Subpixelgruppe aus 3 Subpixel. Zwischen den Maxima des linken und rechten Stereokanals liegen jeweils zwei bzw. drei Subpixel. Respektive können durch Umverteilung ganzer Subpixel die Maxima der Stereokanäle nur in groben Stufen erreicht werden, wobei es zu Stellen erhöhten Übersprechens kommt. Dies ist insbesondere dann der Fall, wenn die Detektionsgenauigkeit gering und/oder eine spürbare zeitliche Verzögerung zwischen Aufenthaltsort und Bildnachführung existiert.

Weiterhin sind in der **Figur 2** die Stereokanäle und die Flächenverteilung der Intensitätsfaktoren, mit denen die zu einer Ansicht gehörenden, jeweils in einer Dreiergruppe angeordneten Subpixel beaufschlagt werden, dargestellt. Die einzelnen Schaubilder verdeutlichen die Wirkung der Umverteilung der Intensitätsfaktoren auf die Position der Stereokanäle. Es wird die Verlagerung der Helligkeitsschwerpunkte durch Umverteilung der Helligkeit mittels Intensitätsfaktoren bei seitlichem Tracking angezeigt. Die sich aus den einzelnen Intensitätsfaktoren in Abhängigkeit von dem Maß der Positionsveränderung des Betrachters ergebende Gewichtungsfunktion GEW ist auf der rechten Ordinate aufgetragen. Die Umverteilung innerhalb der Intensitätsfaktoren ist dabei für alle Subpixel-Gruppen des Matrixdisplays gleich. In mehreren Umverteilungsschritten wird dargestellt, wie die seitliche Verschiebung der Intensität der Subpixel auch über die ursprünglichen Grenzen der Subpixelgruppe hinweg realisiert wird.

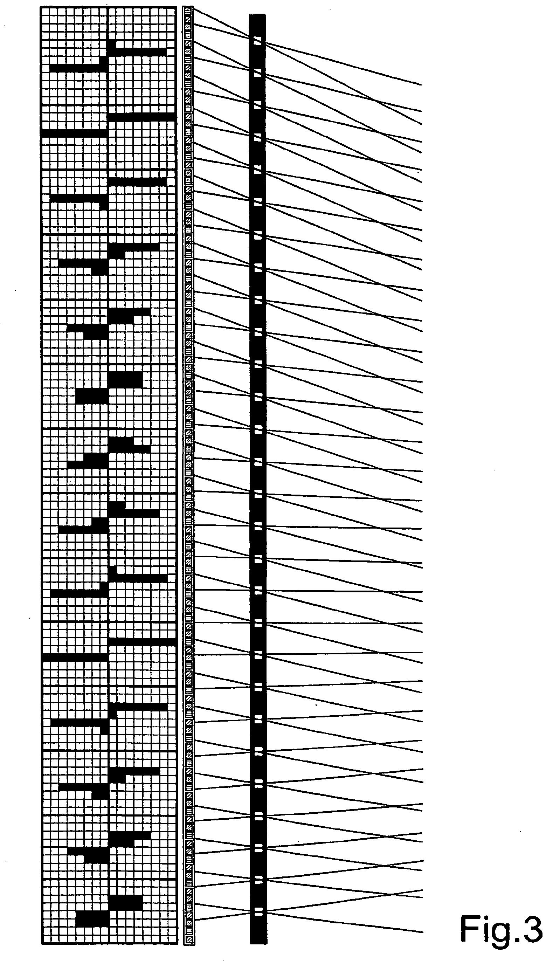

In der **Figur 3** ist ein Intensitätsverteilungsdiagramm für eine an den Matrixbildschirm gegenüber der Ausgangsposition angenäherte Kopfposition des Betrachters dargestellt. Zur besseren Übersichtlichkeit sind in jedem zweiten vorgesehenen Platz für ein Subpixelpaar keine Subpixel dargestellt. Ein Subpixelpaar (rechtes und linkes Subpixel) in der Mitte des Matrixbildschirms, dann etwas Platz (Subpixelpaar nicht dargestellt), dann ein Subpixelpaar mit etwas nach rechts verschobener Intensität - linker Intensitätsfaktor niedriger als rechter Intensitätsfaktor (mit diesen Intensitätsfaktoren werden die auf den Maximalwert normierte Intensität (=1) der jeweiligen Subpixel bei einer Abstandsänderung multipliziert). So geht es weiter, bis je ein Subpixel mit einem Intensitätsfaktor 0 (0%) und ein Subpixel mit einem Intensitätsfaktor 1 (100%) multipliziert wird. Das mit dem Intensitätsfaktor 0 multiplizierte Subpixel wird frei, indem beim nächsten Subpixelpaar das rechte angrenzende Subpixel mit dem wieder ansteigenden Intensitätsfaktor multipliziert wird. Durch diese Intensitätsverlagerung verschieben sich die Schwerpunkte der Subpixelpaare von der Mitte nach außen. Die Bildinformation wird dadurch gespreizt (gedehnt, auseinander gezogen). Diese Spreizung erfolgt, wenn der Betrachter beim elektronischen Tracking näher an das Matrixdisplay herankommt. Ein neuralgischer Punkt ist erreicht, wenn die 100% Marke (Wert 1) des Intensitätsfaktors erreicht ist, da dann die Subpixelreserve innerhalb einer Subpixelgruppe erschöpft ist. Die Spreizung der Intensitätsschwerpunkte der Subpixelgruppen kann aber noch weiter erfolgen, weil wieder ein ganzer Subpixel aus der benachbarten Subpixelgruppe als neue Subpixelreserve frei ist. Dies ist daran zu erkennen, dass bei einem Intensitätsfaktor 1 (100%) ein Abstand zwischen benachbarten Subpixeln von 7 statt 6 Subpixeln Plätzen frei ist. Dies kann auch leicht auch an den senkrechten Linien im Gitter verfolgt werden.

Unterhalb des Intensitätsverteilungsdiagramms ist noch die Zuordnung der einzelnen Subpixel zu den Farben Rot, Blau und Grün und das Barrierenraster mit den einzelnen Barrierenelementen dargestellt. Die Linien zeigen die Einblicksrichtung des Betrachters in die rechte Hälfte des Matrixbildschirms durch die Barrierenelemente hindurch.

Die elektronische Nachführung bei Parallelveränderungen der Kopfposition gegenüber dem Matrixbildschirm ist deutlich einfacher: alle Verlagerungen der Intensitätsschwerpunkte der Subpixelgruppen nach links oder rechts verlaufen entgegengesetzt zur Richtung der Betrachterbewegung (bei einem in Bezug auf den Betrachter vorgeordneten Barrierenraster) und sind anteilig gleich groß (Multiplikation mit konstanten Intensitätsfaktoren über alle Subpixelpaare).

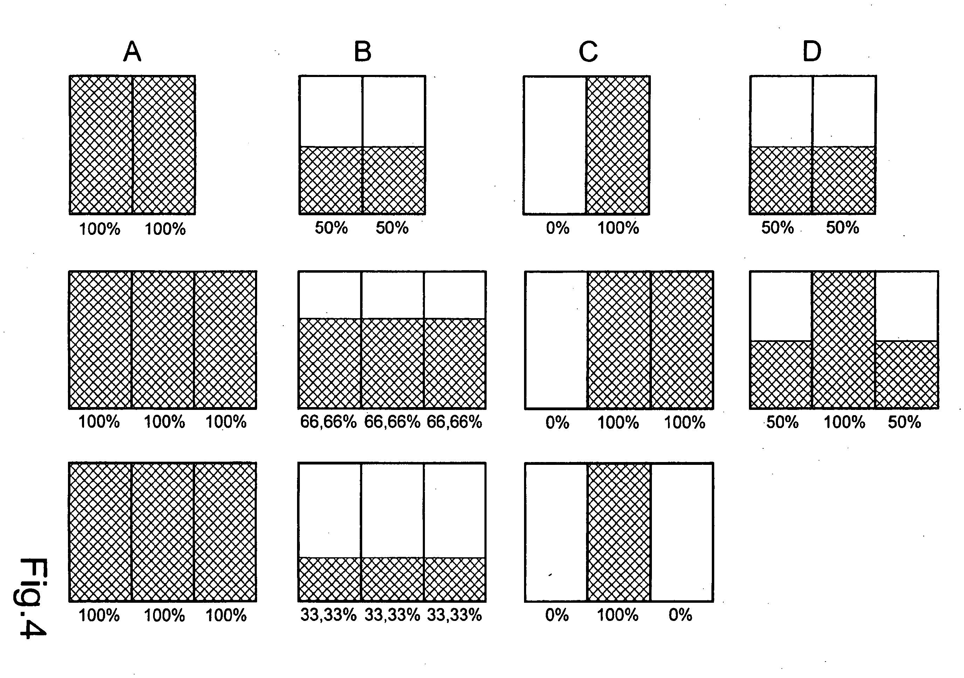

**Figur 4** zeigt Beispiele der Reduzierung der Helligkeit der Subpixel einer horizontal zu einer Ansicht gehörenden Subpixel-Gruppe dargestellt als nominale Verteilung der Intensität über die Fläche der Subpixel einer Subpixel-Gruppe. Es zeigt die Verteilung der Intensität innerhalb der von der Subpixelgruppe repräsentierten Fläche nach der Intensitätsanpassung. Die Kolonne A zeigt die ursprüngliche Intensität, die Kolonne B zeigt das angestrebte Intensitätslevel. Die beiden Kolonnen rechts zeigen die Erreichung des angestrebten Intensitätslevels mit Methode 1 (C) und mit Methode 2(D) (zu den Methoden s.u.).

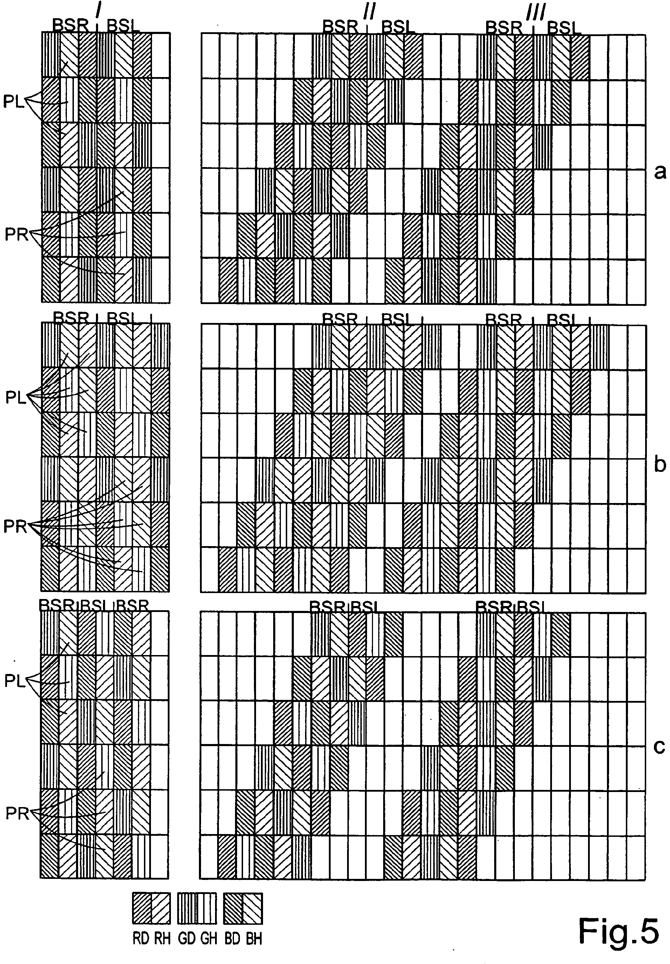

**Figur 5** zeigt Beispiele für Pixelbildung bei zusammengesetzten Subpixelauszügen. Es ist dargestellt, wie sich die Informationen der Subpixel aus unterschiedlichen Subpixelgruppen wieder zu Bildpunkten kombinieren, wenn die Farben der Subpixel entlang der Barrierenelemente alternieren. Horizontal nebeneinander leuchtende Subpixel werden dann nicht als getrennte Farbdots wahrgenommen, sondern als deren Überlagerung. Die sich horizontal ergebende Bildpunktgröße wird von der Barrierenöffnung bestimmt.

Dabei bedeutet R: Rot, G: Grün, B: Blau, H: Hell, D: Dunkel. Die Kolonne I zeigt ein vertikales Mosaik-Muster, die Kolonne II zeig ein schräges Mosaikmuster, die Kolonne III zeigt ein RGB-Matrix-Muster. Gezeigt sind die Bildspalten aus der rechten Ansicht BSR und aus der linken Ansicht BSL. Der Bildausschnitt a zeigt eine Anordnung von 3 Subpixel je Ansicht, wobei 1 Subpixel leuchtet. Es werden Pixel PR der rechten Ansicht und Pixel PL der linken Ansicht gebildet. Der Bildausschnitt b zeigt 3 Subpixel je Ansicht mit je zwei leuchtenden Subpixel. Der Bildausschnitt c zeigt eine Anordnung von 2 Subpixel je Bildansicht mit je einem leuchtenden Subpixel.

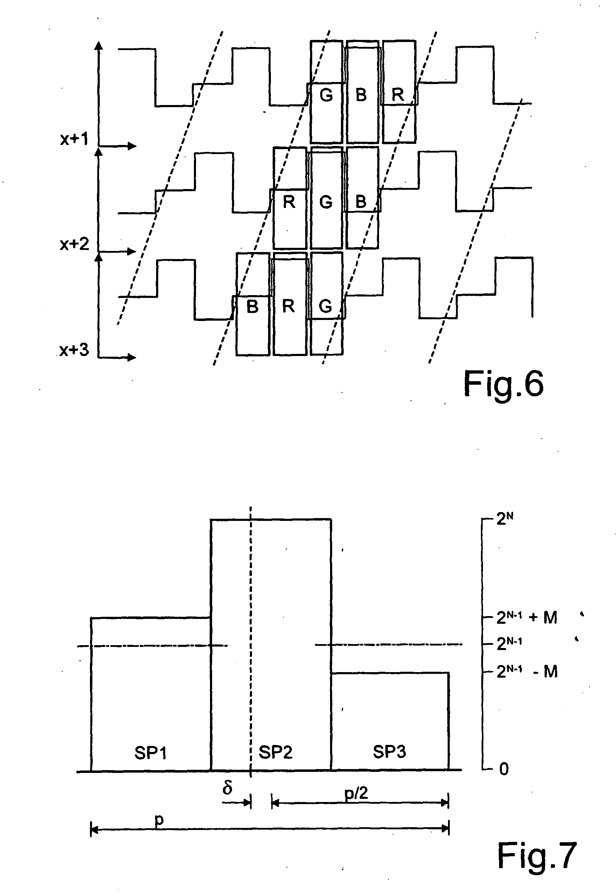

In der **Figur 6** ist ein Ausschnitt aus dem Pixelfeld eines Paneels dargestellt. Die Helligkeit jedes Pixels wird mit einem Intensitätsfaktor multipliziert. Die Gesamtheit der Intensitätsfaktoren über eine Pixelzeile lässt sich als periodische Funktion beschreiben. Die Periodenlänge entspricht einer Pixelgruppenbreite. Die Funktion ist für jede Pixelzeile X gleich, aber von Zeile zu Zeile (X+1, X+2, X+3) um die Breite eines Subpixels seitlich versetzt. Die Intensitätsfaktoren der in Spaltenrichtung aufeinander folgenden Subpixel sind identisch, die in Zeilenrichtung unterschiedlich. Aufsummiert ergibt sich über die dargestellten 3 Subpixelgruppen eine Farbbalance. Mit der Gewichtungsfunktion kann der Schwerpunkt in der Helligkeit der schrägen Bildspalten seitlich verschoben werden.

**Figur 7** zeigt den Verlauf der Gewichtungsfunktion für eine Periodenlänge. Zur Verschiebung des Flächenschwerpunktes wird die Höhe der 3 Stufen in $2^N$ diskreten Schritten verändert. Die Gesamtfläche der Funktion soll dabei gleich bleiben, um die Helligkeit des Pixels nicht zu ändern. Damit der Schwerpunkt maximal verschoben werden kann, wird die Gesamtfläche unter der TreppenKurve zu 2/3 der größtmöglichen Fläche gewählt. Durch Umschichten der Fläche kann der Schwerpunkt dann um $\pm p / 6$ verschoben werden, wobei p der Breite der Subpixelgruppe (bestehend aus drei Farbsubpixel SP1, SP2, SP3) entspricht. Die Verlagerung der Gewichtungsanteile kann auf unterschiedliche Weise geschehen, wie folgende Methodenangaben zeigen. Ausgangslage sei jeweils ein symmetrischer Verlauf der Funktion über die 3 Subpixelgruppen, bei der der Schwerpunkt in der Mitte von Subpixelgruppe 2 liegt.

**Methode 1**:

Ausgangslage: Über Subpixelgruppe 1 und 3 sind $2^{N-1}$ Stufen angeordnet, über Subpixelgruppe 2 beträgt die Anzahl $2^N$ Stufen. Zur Verlagerung des Intensitätsschwerpunktes werden Anteile von Farbsubpixel 3 nach Farbsubpixel 1 gebracht, und umgekehrt, In der **Figur 7** ist dargestellt, wie M Anteile von Farbsubpixel 3 zu Farbsubpixel 1 verlagert wurden. Der Schwerpunkt wandert dann um den Weg

$$\delta_1 = \tfrac{1}{3} M \cdot p \cdot 2^{-N}$$

von der Mitte in Richtung Farbsubpixel 1. Für M gilt: $0 \leq M \leq 2^{N-1}$.

**Methode 2:**

Ausgangslage: Über den Farbsubpixel 1, 2, und 3 sind $2^N/3$ Stufen angeordnet. Zur Verlagerung des Schwerpunktes werden Gewichtungs-Anteile von dem einen äußeren Farbsubpixel zum anderen äußeren Farbsubpixel über das mittlere Farbsubpixel 2 als Zwischenstation gebracht. Ein Anteil von Subpixel 1 wird also zunächst auf das Subpixel 2 gebracht, und im nächsten Schritt auf das Subpixel 3. Der Schwerpunkt wandert dann in jedem Schritt nur um den halben Betrag

$$\delta_2 = \tfrac{1}{3} M \cdot p \cdot 2^{-(N+1)}$$

wie bei Methode 1 aus. Für M gilt: $0 \leq M \leq 2^{N-1}$.

Eine feinstufigere Verschiebung des Schwerpunktes kann erzielt werden, wenn die Umschichtung der Gewichtungs-Anteile nicht für alle Subpixelgruppen in den Zeilen eines Pixel-Panels durchgeführt wird, sondern beispielsweise über jeweils 3 Zeilen verteilt. So kann etwa in **Figur 6** in Zeile X+1 in jedem dritten Bildstreifen ein Anteil von Farbpixel 3 auf Farbpixel 2 umgeschichtet werden (Methode 2). In den Zeilen X+2 und X+3 wird dasselbe durchgeführt, allerdings um jeweils eine Bildspalte versetzt. Der Schwerpunkt des Bildstreifens wird dadurch effektiv nur um $\tfrac{1}{3} \delta_2$ verschoben.

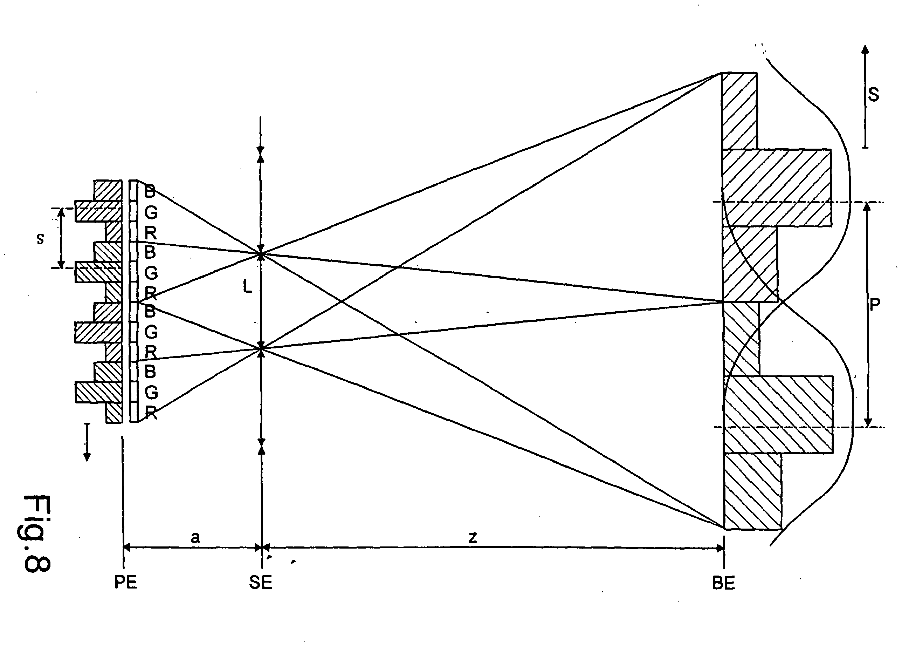

**Figur 8** zeigt die Verhältnisse im Strahlengang zwischen Matrixbildschirm (Pixelebene PE) bzw. Barrierenraster (Schlitzebene SE) und Betrachter (Betrachterebene BE) in einer horizontalen Schnittebene in Höhe der Betrachteraugen. Die Verlagerung des Schwerpunktes der Bildstreifen kann sowohl für seitliches Tracking (Parallelveränderungen des Kopfes) als auch für frontales Tracking (Abstandsänderungen des Kopfes) der Stereo-Zonen benutzt werden. Beim seitlichen Tracking werden alle Bildstreifen simultan seitlich verschoben. Für (frontales) Tiefen-Tracking (z-Tracking) muss der Abstand s der Schwerpunkte zwischen den linken und rechten Bildstreifen verändert werden. Es gilt:

$$s = \tfrac{1}{2} \cdot L \cdot ( 1 - a / z )$$

**Beispielrechnung:**

Der Pixel-Pitch üblicher 17" oder 21" Flüssigkristall- (LC)-Matrixbildschirme hat einen Wert von p = 0,264 mm. Der Augenabstand beträgt im Mittel P = 65 mm. Der Abstand L der Streifen in der Schlitzmaske als Barrierenraster sei auf L = 0,52586 mm festgelegt.

Bei einer nominellen Betrachterentfernung von 600 mm beträgt der Abstand zwischen LC- Matrixbildschirm und Schlitzraster a = 2,45 mm. Zwischen der Entfernung z und dem Schwerpunktabstand s ergibt sich damit folgender Zusammenhang (Δz ist die Abweichung von der nominellen Betrachtungsentfernung):

| z | Δz | s | $(s-p) \cdot 10^3$ | $(s-p)/p \cdot 10^4$ |
|---|---|---|---|---|
| 450 | -150 | 0,264356 | 0,356 | 14 |
| 475 | -125 | 0,264281 | 0,281 | 11 |

(fortgesetzt)

| z | Δz | s | (s-p) ·10³ | (s-p)/p·10⁴ |
|---|---|---|---|---|
| 500 | -100 | 0,264214 | 0,214 | 8 |
| 525 | -75 | 0,264153 | 0,153 | 6 |
| 550 | -50 | 0,264097 | 0,097 | 4 |
| 575 | -25 | 0,264046 | 0,046 | 2 |
| 600 | 0 | 0,264 | 0 | 0 |
| 625 | 25 | 0,263957 | -0,043 | -2 |
| 650 | 50 | 0,263918 | -0,082 | -3 |
| 675 | 75 | 0,263881 | -0,119 | -5 |
| 700 | 100 | 0,263847 | -0,153 | -6 |
| 725 | 125 | 0,263816 | -0,184 | -7 |
| 750 | 150 | 0,263786 | -0,214 | -8 |

Für die nominelle Betrachterentfernung von 750 mm beträgt der Abstand zwischen LC- Matrixbildschirm und Schlitzraster a = 3,05 mm. Der Zusammenhang zwischen der Entfernung z und dem Schwerpunktabstand s ergibt sich damit zu:

| z | Δz | s | (s-p)·10³ | (s-p)/p·10⁴ |
|---|---|---|---|---|
| 600 | -150 | 0,264267 | 0,267 | 10 |
| 625 | -125 | 0,264214 | 0,214 | 8 |
| 650 | -100 | 0,264164 | 0,164 | 6 |
| 675 | -75 | 0,264119 | 0,119 | 5 |
| 700 | -50 | 0,264076 | 0,076 | 3 |
| 725 | -25 | 0,264037 | 0,037 | 1 |
| 750 | 0 | 0,264 | 0 | 0 |
| 775 | 25 | 0,263966 | -0,034 | -1 |
| 800 | 50 | 0,263933 | -0,067 | -3 |
| 825 | 75 | 0,263903 | -0,097 | -4 |
| 850 | 100 | 0,263874 | -0,126 | -5 |
| 875 | 125 | 0,263847 | -0,153 | -6 |
| 900 | 150 | 0,263822 | -0,178 | -7 |

Das frontale Tracking kann die Stereo-Kanäle dem Betrachter in einer Tiefen-Auflösung von etwa 25 mm bis 50 mm nachführen. Das bedeutet nach den Werten in der Tabelle: um diese Tiefen-Auflösung zu gewährleisten, muss sich der Abstand der Schwerpunkte in Schrittlängen von

$$\delta = (s\text{-}p) = 3/10000 \cdot p = 0,0003 \cdot p$$

ändern lassen, also sollte p / δ größer als 3000 sein.

| N | 2^N | p/δ1 | p/δ2 |
|---|---|---|---|
| 8 | 256 | 768 | 1536 |

(fortgesetzt)

| N | $2^N$ | p/δ1 | p/δ2 |
|---|-------|------|------|
| 9 | 512 | 1536 | 3072 |
| 10 | 1024 | 3072 | 6144 |

Dieser Tabelle kann Folgendes entnommen werden: Die Auflösung der Gewichtungsfunktion muss bei Methode 1 mindestens N = 10 Bit, bei der Methode 2 mindestens 9 Bit betragen. Bei der Aufteilung der Schwerpunktsverlagerung auf drei Zeilen würde in einem Display mit in 256 Stufen variierbaren Bildelementen Methode 2 eine ausreichende Auflösung bieten. Das gilt auch noch für Methode 1, wenn eine Aufteilung auf vier Zeilen und für Methode 2 wenn eine Aufteilung auf zwei Zeilen erfolgt.

Eine noch feinstufigere Auflösung kann durch Einführung eines zeitlichen Dittering der genannten Maßnahmen in die vorstehenden Methoden erreicht werden.

**Bezugszeichenliste**

| | |
|---|---|
| a | Abstand zwischen Matrixbildschirm und Barrierenraster |
| B | Blau |
| BE | Betrachterebene |
| BSL | Bildspalte aus der linken Ansicht |
| BSR | Bildspalte aus der rechten Ansicht |
| δ | Schwerpunktsverlagerung |
| D | Dunkel |
| G | Grün |
| GEW | Gewichtungsfunktion |
| H | Hell |
| $I_n$ | Intensitätsfaktor |
| IS | Intensitätsschwerpunkt |
| L | Abstand der Barrierenelemente (pitch) |
| M | Anteile Intensität |
| MB | Matrixbildschirm |
| n | Anzahl der Subpixel inkl. Reserve in einer Subpixelgruppe |
| N | diskrete Schritte für die Intensitätsänderung |
| p | Breite der Subpixelgruppe |
| P | Augenabstand |
| PE | Pixelebene |
| PR | Pixel der rechten Ansicht |
| R | Rot |
| RELIN | relative Intensität (Helligkeit) |
| PL | Pixel der linken Ansicht |
| s | Abstand der Intensitätsschwerpunkte |
| SE | Schlitzebene |
| SP | Farbsubpixel |
| X | Pixelzeile |
| z | Betrachterentfernung zum Matrixbildschirm |
| Δz | Abweichung von der nominellen Betrachtungsentfernung |

**Patentansprüche**

1. Verfahren zur autostereoskopischen Darstellung von Bildinformationen auf einem Matrixbildschirm mit einem parallel zu diesem angeordneten Barrierenraster mit Barrierenelementen,
denen auf dem Matrixbildschirm in Bildzeilen zu
Subpixelgruppen mit jeweils n eine Subpixelreserve einschließenden Subpixeln zusammengefasste, in ihrer Intensität veränderbare Subpixel zugeordnet sind,

auf denen ein gerasterter Subpixelauszug aus einer rechten und einer linken Stereobildansicht angezeigt wird, die über das Barrierenraster in richtiger Zuordnung dem rechten und dem linken Auge eines Betrachters zugeführt werden,

wobei die Bildinformation zumindest bei detektierten horizontalen Parallelveränderungen der Kopfposition des Betrachters zum Matrixbildschirm gegenüber einer bildschirmmittigen Ausgangsposition durch eine proportionale Verschiebung von Intensitätsschwerpunkten der Subpixelgruppen und eine Neuzuordnung von Bildinformation zu dem bei der Parallelveränderung dem jeweils anderen Auge sichtbar werdenden Subpixel horizontal in den Bildzeilen des Matrixbildschirms nachgeführt wird,

**dadurch gekennzeichnet, dass**

- zunächst Intensitätsschwerpunkte der Subpixelgruppen in Abhängigkeit von der Position des Betrachters ermittelt werden, und
- einhergehend mit einer Erniedrigung der Gesamtintensität des Matrixbildschirms auf mindestens einen Wert (n-1)/n der Gesamtintensität des Matrixbildschirms die Helligkeitswerte der Subpixel um die Intensitätsschwerpunkte der Subpixelgruppen verteilt werden und
- anschließend diese Intensitätsschwerpunkte der Subpixelgruppen unter Beibehaltung der reduzierten Gesamtintensität in den Subpixelgruppen in den Bildzeilen

- bei detektierten Parallelveränderungen der Kopfposition des Betrachters relativ zum Matrixbildschirm bei einer Anordnung des Barrierenrasters in Blickrichtung vor dem Matrixbildschirm gegenläufig zur Parallelveränderung und bei einer Anordnung des Barrierenrasters in Blickrichtung hinter dem Matrixbildschirm mitlaufend zur Parallelveränderung kontinuierlich seitlich verschoben werden und/oder
- bei detektierten Änderungen des Abstands der Kopfposition des Betrachters relativ zum Matrixbildschirm zu den Seitenrändern des Matrixbildschirms zunehmend bei einer Anordnung des Barrierenrasters in Blickrichtung vor dem Matrixbildschirm umgekehrt proportional und bei einer Anordnung des Barrierenrasters in Blickrichtung hinter dem Matrixbildschirm proportional zu einer Annäherung gespreizt und zu einer Entfernung gestaucht werden,

- wobei durch entsprechende Änderung der Intensität der Subpixel eine Verschiebung, Spreizung oder Stauchung der Intensitätsschwerpunkte der Subpixelgruppen über in den Bildzeilen direkt benachbarte Subpixel und in Abhängigkeit von der Größe der Parallel- und Abstandsänderung auch über die Grenzen zwischen benachbarten Subpixelgruppen der unterschiedlichen Stereobildansichten hinweg erfolgt und freiwerdende Subpixel in die benachbarte Subpixelgruppe der jeweils anderen Stereobildansicht einbezogen werden, wobei die Änderung der Instansität der Subpixel durch eine periodische Funktion beschrieben ist, deren Periodenlänge der Breite der Subpixelgruppe entspricht, und welche auf alle Zeilen eines jeden Ausschnittes aus dem Pixelfeld ausgewendet wird, wobei die periodische Funktion von Zeile zu Zeile so einsetzt, dass sich aufsummiert über die Subpixelgruppen des jeweiligen Ausschnittes eine Farbbalance ergibt.

2. Verfahren nach Anspruch 1,
**dadurch gekennzeichnet, dass**
bei einem schräg verlaufenden Barrierenraster oder schräg
verlaufenden Subpixeln auch vertikale
Parallelveränderungen der Kopfposition des Betrachters zum Matrixbildschirm durch einen weiteren Intensitätsfaktor berücksichtigt werden.

3. Verfahren nach Anspruch 1 oder 2,
**dadurch gekennzeichnet, dass**
die Verschiebung, Spreizung oder Stauchung der Intensitätsschwerpunkte der Subpixelgruppe durch eine Multiplikation der Intensität der Subpixel mit in Abhängigkeit von den Änderungen der Kopfposition
ermittelten Intensitätsfaktoren erfolgt, wobei die Intensitätsfaktoren auf die maximale Intensität der Subpixel normiert und die verschiedenen
Intensitätsfaktoren aufsummierbar sind.

4. Verfahren nach einem der Ansprüche 1 bis 3,
**dadurch gekennzeichnet, dass**

die Stereobildansichten zeitsequenziell unter Verwendung eines schaltbaren Barrierenrasters dargestellt werden.

**5.** Verfahren nach einem der Ansprüche 1 bis 4,
**dadurch gekennzeichnet, dass**
die Subpixel polychrome oder monochrome Intensitäten aufweisen und vertikal oder schräg mit einem bildzeilenweisen Versatz von einem Subpixel angeordnet sind, wobei die Barrierenelemente des zugehörigen Barrierenrasters auch vertikal oder schräg verlaufen.

**6.** Verfahren nach einem der Ansprüche 1 bis 5,
**dadurch gekennzeichnet, dass**
Subpixel aus mehreren Subpixelauszügen entnommen werden, wobei keine redundanten Subpixelauszüge verwendet werden.

**7.** Verfahren nach einem der Ansprüche 1 bis 6,
**dadurch gekennzeichnet, dass**
die aktuelle Kopfposition durch Einbeziehung eines Trackingverfahrens, insbesondere eines videobasierten Trackingverfahrens, zum Auffinden von Kopf- oder Augendetails des Betrachters ermittelt wird.

**8.** Verfahren nach Anspruch 7,
**dadurch gekennzeichnet, dass**
eine Aufnahmeeinstellung für die Stereobildansichten in Abhängigkeit von der vom Trackingverfahren bestimmten aktuellen Augenposition dynamisch erfolgt.

**9.** Verfahren nach einem der Ansprüche 1 bis 8,
**dadurch gekennzeichnet, dass**
der Abstand des vor- oder nachgelagerten Barrierenrasters zum Matrixbildschirm veränderbar ist.

**Claims**

**1.** A method for the autostereoscopic display of image information on a matrix screen comprising a barrier raster which is arranged parallel thereto and includes barrier elements,
to which subpixels are assigned which are combined on the matrix screen in image lines into subpixel groups each comprising n subpixels including a subpixel reserve and which have a variable intensity and display a raster subpixel extract from right-hand and left-hand stereo image views which are supplied in proper assignment via the barrier raster to the right and left eyes of a viewer,
wherein the image information is proportionally shifted at least in the case of detected horizontal parallel alterations in the position of the viewer's head relative to the matrix screen with respect to a screen-central initial position by a proportional shift of intensity focuses of the subpixel groups and a reassignment of image information to the subpixel which becomes visible to the respectively other eye as a result of the parallel alteration,
**characterized in that**

- intensity focuses of the subpixel groups are first determined in accordance with the viewer's position, and
- accompanied by a reduction in the total intensity of the matrix screen to at least a value (n-1)/n of the total intensity of the matrix screen, the brightness values of the subpixels are distributed around the intensity focuses of the subpixel groups, and
- while maintaining the reduced total intensity in the subpixel groups in the image lines, these intensity focuses of the subpixel groups are then

- continuously displaced laterally contra-directional to the parallel alteration in the case of detected parallel alterations in the position of the viewer's head relative to the matrix screen with an arrangement of the barrier raster in the viewing direction in front of the matrix screen and concurrently to the parallel alteration in the case of an arrangement of the barrier raster in the viewing direction behind the matrix screen and/or
- spread, in the case of detected changes in the distance of the position of the viewer's head relative to the matrix screen, increasing to the side edges of the matrix screen, in the case of an arrangement of the barrier raster in the viewing direction in front of the matrix screen, in inversely proportional fashion and, in the case of an arrangement of the barrier raster in the viewing direction behind the matrix screen, proportionally to an approach and compressed relative to a retreat,

- wherein as a result of a corresponding change in the intensity of the subpixels a displacement, widening or compression of the intensity focuses of the subpixel groups is effected beyond subpixels directly adjacent in the image lines and, in accordance with the size of the parallel and distance change, also beyond the boundaries between adjacent subpixel groups of the different stereo image views and subpixels which are released are incorporated into the adjacent subpixel group of the respectively other stereo image view, wherein a change in the intensity of the subpixels is described by a periodic function whose period length corresponds to the width of the subpixel group and which is applied to all lines of each segment of the pixel field, wherein the periodic function is applied line by line so as to form a color balance in an addition over the subpixel groups of the respective segment.

2. The method according to claim 1,
   **characterized in that**
   in the case of an inclined barrier raster or inclined subpixels vertical parallel alterations in the position of the viewer's head relative to the matrix screen are also considered by a further intensity factor.

3. The method according to claim 1 or 2,
   **characterized in that**
   the intensity focuses of the subpixel groups are displaced, widened or compressed by a multiplication of the intensity of the subpixels by intensity factors determined in accordance with the changes in the position of the head, wherein the intensity factors are standardized to the maximum intensity of the subpixels and the different intensity factors can be added.

4. The method according to any of claims 1 to 3,
   **characterized in that**
   the stereo image views are shown time-sequentially using a switchable barrier raster.

5. The method according to any of claims 1 to 4,
   **characterized in that**
   the subpixels have polychromatic or monochromatic intensities and are arranged vertically or in inclined fashion with an image line-wise displacement of a subpixel, wherein the barrier elements of the associated barrier raster also extend vertically or in inclined fashion.

6. The method according to any of claims 1 to 5,
   **characterized in that**
   subpixels are taken from several subpixel extracts, wherein no redundant subpixel extracts are used.

7. The method according to any of claims 1 to 6,
   **characterized in that**
   the current position of the head is determined by including a tracking method, in particular a video-based tracking method, for detecting the head or eye details of the viewer.

8. The method according to claim 7,
   **characterized in that**
   a recording setting for the stereo image views is made dynamically in accordance with the specific current eye position determined by the tracking method.

9. The method according to any of claims 1 to 8,
   **characterized in that**
   the distance of the upstream or downstream barrier raster to the matrix screen can be changed.

**Revendications**

1. Procédé de représentation autostéréoscopique d'informations d'images sur un écran matriciel avec une trame barrière agencée parallèlement à celui-ci qui comprend des éléments de barrière, auquel sont associés des sous-pixels regroupés sur l'écran matriciel en lignes d'images pour donner des groupes de sous-pixels comprenant chacun n sous-pixels incluant une réserve de sous-pixels,
   sur lesquels est affiché un extrait de sous-pixels tramés composé d'une vue d'image stéréoscopique de droite et d'une vue d'image stéréoscopique de gauche qui sont envoyées via la trame barrière en association correcte vers l'oeil droit et vers l'oeil gauche d'un observateur,

dans lequel les informations d'images sont réajustées horizontalement dans les lignes d'images de l'écran matriciel au moins en cas d'une détection de modifications parallèles horizontales de la position de la tête de l'observateur vis-à-vis de l'écran matriciel par rapport à une position de départ centrée par rapport à l'écran, par un déplacement proportionnel des barycentres d'intensité et des groupes de sous-pixels et une nouvelle association des informations d'images avec le sous-pixel qui devient visible à l'autre oeil respectif lors de la modification parallèle, **caractérisé en ce que**

- on détermine tout d'abord des barycentres d'intensité des groupes de sous-pixels en fonction de la position de l'observateur, et

- en association avec un abaissement de l'intensité totale de l'écran matriciel à au moins une valeur (n-1)/n fois l'intensité totale de l'écran matriciel, les valeurs de luminosité des sous-pixels sont réparties autour des barycentres d'intensité des groupes de sous-pixels, et

- ensuite, ces barycentres d'intensité des groupes de sous-pixels sont, en conservant l'intensité totale réduite dans les groupes de sous-pixels dans les lignes d'images :

- lors de la détection de modifications parallèles de la position de la tête de l'observateur par rapport à l'écran matriciel et pour un agencement de la trame barrière en avant de l'écran matriciel en direction d'observation, déplacés latéralement en continu en sens opposé à la modification parallèle, alors que pour un agencement de la trame barrière en arrière de l'écran matriciel en direction d'observation ils sont déplacés latéralement en continu dans le même sens que la modification parallèle, et/ou

- lors de la détection de modifications de la distance de la position de la tête de l'observateur par rapport à l'écran matriciel vers les bordures latérales de l'écran matriciel, pour un agencement de la trame barrière devant l'écran matriciel en direction d'observation ils sont écartés de manière inversement proportionnelle à un rapprochement et sont comprimés de manière inversement proportionnelle à un éloignement, alors que pour un agencement de la trame barrière derrière l'écran matriciel en direction d'observation ils sont écartés de manière proportionnelle à un rapprochement et sont comprimés de manière proportionnelle à un éloignement,

- et par modification correspondante de l'intensité des sous-pixels il se produit un déplacement, un écartement ou une compression des barycentres d'intensité des groupes de sous-pixels sur des sous-pixels directement voisins dans les lignes d'images et en fonction de l'amplitude de la modification parallèle et de la modification de distance, également au-delà des limites entre groupes voisins de sous-pixels des vues d'images stéréoscopiques différentes, et des sous-pixels devenus libres dans les groupes de sous-pixels voisins de l'autre vue d'image stéréoscopique respective sont impliqués, et la modification de l'intensité des sous-pixels est décrite par une fonction périodique dont la longueur de la période correspond à la largeur des groupes de sous-pixels et qui est appliquée à toutes les lignes de chaque détail provenant du champ de pixels, et la fonction périodique s'applique de ligne en ligne de telle façon qu'il en résulte un équilibre des couleurs par sommation sur les groupes de sous-pixels du détail respectif.

2. Procédé selon la revendication 1,
**caractérisé en ce que**
pour une trame barrière s'étendant en oblique ou pour des sous-pixels s'étendant en oblique, on tient également compte de modifications parallèles verticales de la position de la tête de l'observateur vis-à-vis de l'écran matriciel par un autre facteur d'intensité.

3. Procédé selon la revendication 1 ou 2,
**caractérisé en ce que**
le déplacement, l'écartement ou la contraction des barycentres d'intensité des groupes de sous-pixels a lieu par une multiplication de l'intensité des sous-pixels avec des facteurs d'intensité déterminés en fonction des modifications de la position de la tête, lesdits facteurs d'intensité étant normalisés à l'intensité maximum des sous-pixels et les différents facteurs d'intensité peuvent être additionnés

4. Procédé selon l'une des revendications 1 à 3,
**caractérisé en ce que** les vues d'images stéréoscopiques sont représentées séquentiellement dans le temps en utilisant une trame barrière commutable.

**5.** Procédé selon l'une des revendications 1 à 4,
**caractérisé en ce que** les sous-pixels présentent des intensités polychromes ou monochromes et sont agencés verticalement ou en oblique avec un décalage d'un sous-pixel suivant les lignes d'images, et les éléments de barrière de la trame barrière associée s'étendent également verticalement ou en oblique.

**6.** Procédé selon l'une des revendications 1 à 5,
**caractérisé en ce que** des sous-pixels provenant de plusieurs extraits de sous-pixels sont prélevés, et l'on n'utilise aucun extrait de sous-pixels redondant.

**7.** Procédé selon l'une des revendications 1 à 6,
**caractérisé en ce que** la position actuelle de la tête est déterminée en utilisant un procédé de suivi, en particulier un procédé de suivi basé sur vidéo, pour trouver des détails de la tête ou des yeux de l'observateur.

**8.** Procédé selon la revendication 7,
**caractérisé en ce qu'**un réglage de prise de vue pour les vues d'images stéréoscopiques a lieu de manière dynamique en fonction de la position actuelle des yeux déterminée par le procédé de suivi.

**9.** Procédé selon l'une des revendications 1 à 8,
**caractérisé en ce que** la distance de la trame barrière placée en avant ou en arrière par rapport à l'écran matriciel est variable.

Fig.1

Fig.2

Fig.3

Fig.4

Fig.5

RD RH  GD GH  BD BH

Fig.6

Fig.7

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0354851 A2
- DE 19736035 A1
- EP 0836332 B1
- DE 19827590 C2
- WO 9827451 A1